# EUROPÄISCHE PATENTSCHRIFT

(11) **EP 1 654 200 B1**
(45) Veröffentlichungstag und Bekanntmachung des Hinweises auf die Patenterteilung: **21.02.2007**
(21) Anmeldenummer: 03817893.5
(22) Anmeldetag: 11.08.2003
(51) Int. Cl.: C03B 33/03, C03B 33/023

(54) **GLASSCHNEIDETISCH**
GLASS CUTTING TABLE
TABLE DE DECOUPAGE DE VERRE

(43) Veröffentlichungstag der Anmeldung: 10.05.2006
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred
(86) Internationale Anmeldenummer: PCT/AT2003/000230
(87) Internationale Veröffentlichungsnummer: WO 2005/014497

(56) Entgegenhaltungen:
- EP-A- 0 842 905
- FR-A- 2 545 815
- US-A- 1 852 310
- PATENT ABSTRACTS OF JAPAN Bd. 1995, Nr. 07 31 August 1995 -& JP 07 089 740 A (SHIGIYA SEIKI SEISAKUSHO:KK) 04 April 1995

## Beschreibung

Die Erfindung betrifft einen Glasschneidetisch mit den Merkmalen von Anspruch 1, mit einer Auflage für die zu teilende Glastafel, mit einer entlang der Auflage verfahrbaren Schneidebrücke und mit einem an der Schneidebrücke verfahrbar angeordneten Schneidekopf. Der Schneidekopf trägt ein Werkzeug, z.B. ein Schneiderädchen, zum Ritzen der Glastafel entlang der Aufteilungskontur.

Ein solcher Glasschneidetisch ist aus der JP 07089740 A bekannt. Bei diesem bekannten Glasschneidetisch ist die Schneidbrücke über Führungen unterhalb der Glasauflageplatte geführt. Es ist ein gemeinsamer Antriebsmotor für beide Zahnriemen für das Bewegen der Schneidbrücke entlang des Tisches vorgesehen. Die Führungen und der Antrieb der Schneidbrücke bilden eine Einheit mit der Auflageplatte. Ein Hochklappen der Auflageplatte ist nicht vorgesehen.

Die FR 2 545 815 A zeigt einen Glasschneidetisch, dessen Schneidbrücke in eine Lage außerhalb des Bereichs der Auflageplatte für Glas bewegt werden kann, um diese hochklappen zu können. Die Schneidbrücke ist auf Führungen geführt, die in etwa die gleiche Höhenlage haben, wie die Auflagefläche des Schneidtisches. Eine der Führungen, und zwar die im Bereich der Schwenkachse der Auflageplatte liegende, ist geteilt.

Bei den bekannten Glasschneidetischen wird die Schneidebrücke an Führungsstangen (z.B. Rundstangen) geführt, die in der Nähe der als Tischplatte ausgeführten Auflage für die zu teilende Glastafel montiert sind. Auch der Antrieb für das Verfahren der Schneidebrücke ist im Bereich der Auflage für die zu teilende Glastafel montiert.

Für das Bewegen (Verfahren) der Schneidebrücke entlang der Auflage sind Antriebe bekannt, die im Bereich der Auflage für die zu teilende Glastafel montierte Zahnstangen und an der Schneidebrücke drehangetriebene Ritzel, welche die Zahnstangen kämmen, aufweisen. Problematisch bei diesen Antrieben ist es, daß die Zahnstangen nach oben weisende verzahnungen aufweisen, so daß die Gefahr besteht, daß absplitternde Glasteile in die Zahnstangen gelangen und deren Zahnungen beschädigen, so daß ein präzises Verfahren der Schneidebrücke nicht mehr möglich ist. Es ist schon vorgeschlagen worden, die Zahnstangen mit Abdeckungen zu versehen. Solche Abdeckungen müssen aber im Bereich der sich entlang der Zahnstangen bewegenden Ritzel von den Zahnstangen abgehoben werden.

Als Antrieb für das Verfahren von Schneidebrücken sind auch Endloszahnriemen bekannt.

Die bekannten Schneidetische (vgl. FR 2 545 815 A) haben den Nachteil, daß sie, insbesondere ihre Auflage für die zu teilende Glastafel, nur schlecht zugänglich sind, da am Rand der Auflage die Antriebe und die Führungen für die Schneidebrücke angebracht sind.

Ein weiterer Nachteil der bekannten Ausführungsformen für die Führung und die Antriebe von Schneidebrücken von Glasschneidetischen ergibt sich bei Glasschneidetischen, bei denen die Tischplatte zum Aufnehmen zu teilender Glastafeln aus der horizontalen Gebrauchslage in eine Schräglage, in der eine zu teilende Glastafel an die Tischplatte angelegt wird, hochkippbar sind. Bei den bekannten Schneidetischen müssen die Schneidebrücke, die Führungen sowie die Antriebe für die Schneidebrücke mit hochgekippt werden, was erhebliche Belastungen und entsprechend stark dimensionierte Antriebe erforderlich macht.

Es ist auch schon vorgeschlagen worden (FR 2 545 815 A), die Tischplatte in einen hochklappbaren Teil und einen Teil, in dem sich die Schneidebrücke in einer Warteposition befindet, zu unterteilen, was aber den Nachteil hat, daß bei dieser Ausführungsform Kuppelvorrichtungen für die dann geteilt auszubildenden Führungsstangen einerseits und die Zahnstangen anderseits erforderlich sind.

Glasschneidetische der beiden vorerwähnten Bauarten sind in der EP 0 673 890 B erwähnt und werden als nachteilig beschrieben. Die EP 0 673 890 B schlägt einen Glasschneidetisch vor, bei dem die Führungsstangen, auf welchen die Schneidebrücke verschiebbar ist, unterhalb der Auflageplatte am Grundgestell befestigt sind. Wie der Antrieb für das Bewegen der Schneidebrücke ausgebildet ist, ist in der EP 0 673 890 B nicht beschrieben. Die EP 0 673 890 B verwendet zum Auflegen von Glasplatten aus der Auflageplatte hochschwenkbare Arme, um die Nachteile von Glasschneidetischen mit als Kipptisch ausgebildeter Auflageplatte zu vermeiden, nimmt aber Nachteile verschwenkbarer Arme für das Abheben (Auflegen) von Glas in Kauf.

Der Erfindung liegt die Aufgabe zugrunde, einen Glasschneidetisch der eingangs genannten Gattung anzugeben, bei dem der Antrieb und die Führung für die Schneidfläche verbessert ist.

Gelöst wird diese Aufgabe in erster Linie mit einem Schneidetisch für Glastafeln, der die Merkmale von Anspruch 1 aufweist.

Bevorzugte und vorteilhafte Ausgestaltungen der erfindungsgemäßen Ausführung des Schneidetisches sind Gegenstand der Unteransprüche.

Da bei dem erfindungsgemäßen Schneidetisch die Führungen und die

Antriebe für die Schneidebrücke mit Abstand unterhalb der Auflage angeordnet sind, sind nicht nur die Auflage (Tischplatte) gut zugänglich, sondern es besteht auch keine Gefahr mehr, daß der Antrieb und/oder die Führung der Schneidebrücke durch Glassplitter beeinträchtigt oder beschädigt werden.

Ein weiterer Vorteil besteht darin, daß die als Auflage dienende Tischplatte weniger massiv ausgebildet sein muß, da sie nicht mehr dazu herangezogen werden braucht, die Schneidebrücke und die Führungen und den Antrieb für die Schneidebrücke zu tragen.

Dies hat auch den Vorteil, daß bei einer Ausführungsform, bei der die Auflage oder (nur) ein Teil der Auflage (Tischplatte) hochkippbar ist, um Glastafeln aufzunehmen, dieser Teil der Auflage leichter ausgebildet sein kann, so daß weniger kräftige Antriebe erforderlich sind, um diesen Teil der als Auflage für zu teilende Glastafeln dienende Tischplatte hochzukippen. Es entfällt dann auch die Problematik beim Kuppeln der Führungen/Antriebe, wenn der hochkippbare Teil der Tischplatte wieder zurückgeklappt wird.

Weitere Einzelheiten und Merkmale sowie Vorteile der Erfindung ergeben sich aus der nachstehenden Beschreibung eines bevorzugten Ausführungsbeispiels anhand der Zeichnungen.

### Es zeigt:

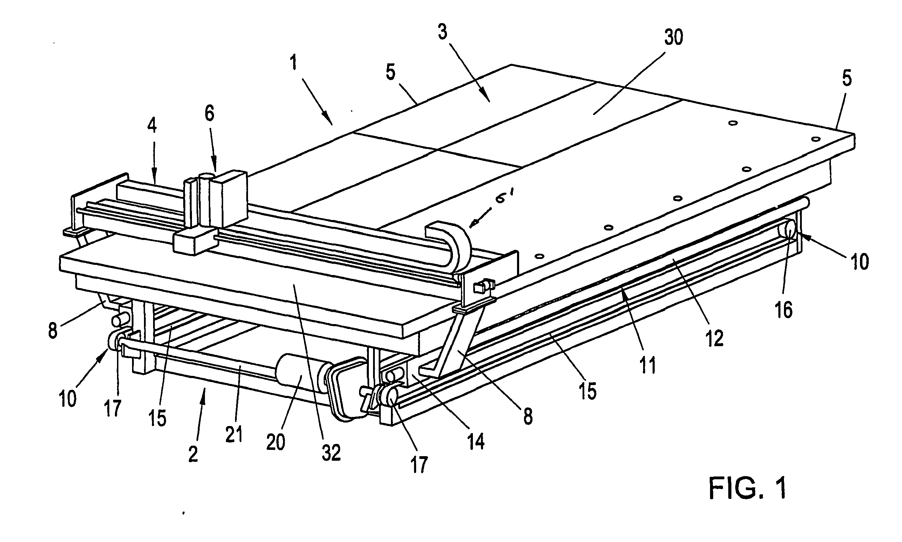

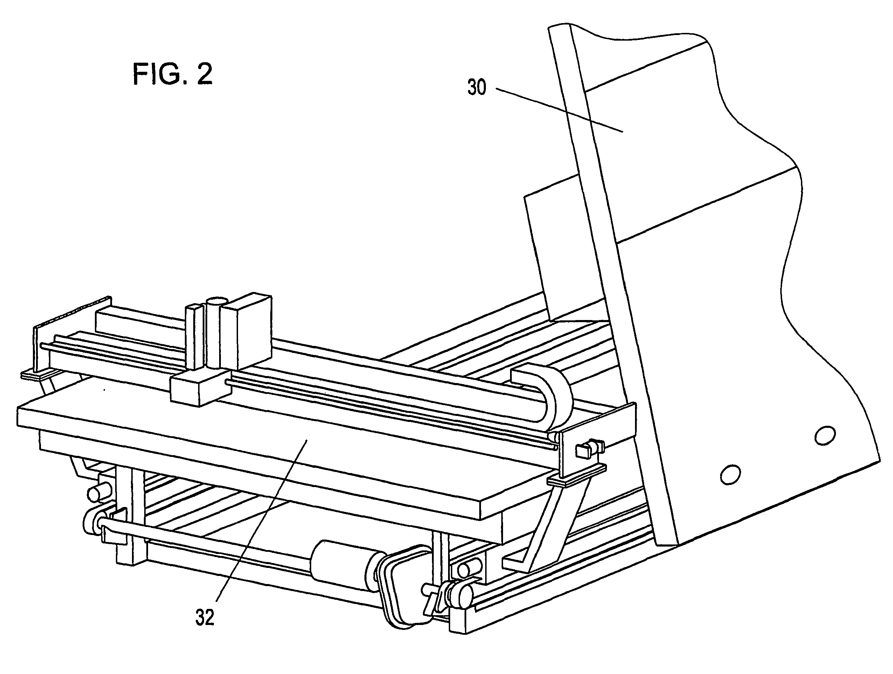

Fig. 1 in Schrägansicht einen Glasschneidetisch gemäß der Erfindung und Fig. 2 den Glasschneidetisch von Fig. 1 teilweise und in vergrößertem Maßstab mit hochgeklapptem Teil der Auflage.

Ein in den Fig. 1 und 2 in Schrägansicht gezeigter Glasschneidetisch 1 besitzt ein über nicht gezeigte Füße auf einem Boden aufgestelltes Grundgestell 2. Das Grundgestell 2 trägt eine Platte 3 (Tischplatte), die als Auflage für eine zu teilende Glastafel (Bandmaße) dient. Die Platte 3 kann mit nicht gezeigten Fördermitteln für das Bewegen und Positionieren der zu teilenden Glastafel vor und nach dem Schneiden ausgestattet sein. Des weiteren kann die Platte 3 eine Filzauflage aufweisen und es besteht die Möglichkeit, die Platte 3 als Luftkissen-Platte auszubilden, in welchem Fall in der Platte 3 nach einem bestimmten Muster verteilt angeordnete Luftaustrittsöffnungen für diesen Öffnungen zugeführte Druckluft aufweist, so daß sich zwischen der die Auflage bildenden Platte 3 und einer Glastafel ein Luftkissen, das die Reibung zwischen Glastafel und Auflage 3 vermindert, ausbilden kann.

Die Platte 3 ist meist rechteckig ausgebildet. Parallel zur kürzeren Seite der als Auflage dienenden Platte 3 ausgerichtet ist eine Schneidebrücke 4 vorgesehen. Die Schneidebrücke 4 ist entlang der längeren Seite 5 der Auflage 3 verfahrbar. Die Schneidebrücke 4 trägt einen durch einen nicht näher gezeigten Antrieb, meist einen Zahnriemenantrieb entlang der Schneidebrücke 4 verfahrbaren Schneidekopf 6 zum Ausführen der eigentlichen Schneidearbeit. Der Schneidekopf 6 kann beliebig ausgebildet sein und trägt meistens ein Schneiderädchen, das im Schneidekopf 6 um eine zur Auflage 3 senkrechte Achse verdrehbar, sowie normal zur Platte 3 heb- und senkbar ist, und dem eine Schneideflüssigkeit zugeführt werden kann. Der Schneidekopf 6 kann auch zum gleichzeitigen Entschichten und Schneiden (Ritzen) von Glastafeln ausgebildet sein (vgl. EP 0 517 176 A). Die Energieführungskette 6' zum Schneidekopf 6 ist in Fig. 1 und 2 nur teilweise dargestellt.

Die Schneidebrücke 4 ist über zwei an ihren Enden befestigte und von oben nach unten schräg nach innen, d.h. unter die Außenkontur der Platte 3 ragende Arme 8 mit Führungs- und Antriebseinheiten 10, die an beiden Längsseiten des Glasschneidetisches 1 angeordnet sind, verbunden.

Die Führung 11 für die Schneidebrücke 4 besteht aus zwei parallel zu den Längsseiten 5 der Auflageplatte 3 ausgerichteten, am Grundgestell 2 befestigten Führungsstangen 12 (z.B. Rundstäben), auf welchen an den Armen 8 befestigte Gleitschuhe 14 gleitend verschiebbar sind. Die Führungen 11 für die Schneidebrücke 4 sind mit Abstand unter der Platte 3 und von dieser unabhängig am Grundgestell 2 befestigt und gegenüber den Längsseiten 5 der Platte 3 zur Mitte der Platte 3 hin versetzt angeordnet (deswegen sind auch die Arme 8 der Schneidebrücke 4 schräg ausgerichtet).

Um die Schneidebrücke 4 entlang der Platte 3 des Glasschneidetisches 1 zu bewegen, sind an beiden Längsseiten des Grundgestells 2, u.zw. mit Abstand von und unterhalb der Führungsstangen 12 für die Schneidebrücke 4 Förderglieder in Form von Zahnriemen 15 vorgesehen. Die Zahnriemen 15 laufen um frei drehbare Umlenkrollen 16 und um Zahnräder 17, die drehangetrieben sind. Für den Drehantrieb der Zahnräder 17 (in Fig. 1 die beiden links angeordneten Zahnräder) ist ein gemeinsamer Getriebemotor 20 vorgesehen, der eine Welle 21 antreibt, die ihrerseits ohne Zwischenschaltung weiterer Übertragungsmittel die Zahnräder 17 antreibt. So ist ein (weitestgehend) spielfreier Antrieb für das Bewegen der Schneidebrücke 4 entlang der Auflage 3 des Tisches 1 beim Ausführen des "Schneidens" (Ritzen) ein Glastafel möglich.

Es ist ersichtlich, daß die Antriebs- und Führungseinheiten 10 für die Schneidebrücke 4 von der als Auflage dienenden Platte 3 des Glasschneidetisches unabhängig, nämlich unmittelbar vom Grundgestell 2 getragen werden.

Bei der in den Fig. 1 und 2 gezeigten Ausführungsform ist die Platte 3, welche die Auflage des Glasschneidetisches 1 gemäß der Erfindung bildet, geteilt, u.zw. in einen größeren Teil 30 und in einen schmäleren Teil 32. Der schmälere Teil 32 der Platte 3 ist mit dem Grundgestell 2 starr verbunden und bildet einen Bereich, in dem sich die Schneidebrücke 4 in ihrer Bereitschaftsstellung befindet. Der andere, größere Teil 30 der Platte 3 ist wie in Fig. 2 gezeigt, um eine parallel zu einem Längsrand 5 der Platte 3 (längere Seite) ausgerichtete Achse hochkippar, um eine Glastafel aus einem Glaslager oder von einem Hebekran zu übernehmen.

Es ist ersichtlich, daß die Platte 3 des erfindungsgemäßen Schneidetisches 1 nicht dazu herangezogen wird, Führungen und/oder Antriebe für die Schneidebrücke 4 zu tragen, so daß diese leichtgewichtig ausgebildet sein kann, weil sie nicht auch noch das Gewicht der Führungs-/Antriebseinheit 10 für die Schneidebrücke 4 tragen muß. Es hat auch den Vorteil, daß beim Hochkippen die Schneidebrücke 4 und ihre Antriebe und Führungen 10 nicht mitbewegt werden brauchen.

Durch die Anordnung der Führungs- und Antriebseinheit 10 des erfindungsgemäßen Glasschneidetisches 1 im Abstand unterhalb der Auflage 3 und gegenüber der Platte 3 derselben nach innen versetzt, besteht keine Gefahr, daß die Antriebs- und/oder die Führungseinheiten 10 für die Schneidebrücke 4 durch Glassplitter oder ähnliches beeinträchtigt, oder beschädigt werden.

Die erfindungsgemäße Ausbildung des Glasschneidetisches 1, insbesondere die in den Zeichnungen gezeigte Ausführungsform, hat den Vorteil, daß die Auflageplatte 3 gut zugänglich ist, da neben ihr nicht noch Führungen/Antriebe 10 für die Schneidebrücke 4 vorgesehen sind, da diese gegenüber der Außenkontur der Platte 3 nach innen versetzt am Maschinengestell 2, also unterhalb der Auflageplatte 3 und von dieser unabhängig befestigt bzw. angeordnet sind.

Bei der erfindungsgemäßen Vorrichtung ist in einer bevorzugten Ausführungsform die Führung der Schneidebrücke 4 (insbesondere die Führungsstangen 12) und/oder der Antrieb der Schneidebrücke (insbesondere die Endlosförderglieder 12) unabhängig von einer klappbaren Auflage 3 des Glasschneidetisches montiert, beispielsweise am Maschinengestell 2 befestigt/gelagert. Insbesondere ist die gesamte Führungs- und Antriebseinheit 10 unabhängig von der Auflage 3, beispielsweise am Grundgestell 2 angebracht.

In einer Ausführungsform kann die Schneidebrücke 4 in eine Wartestellung außerhalb einer hochklappbaren Platte 3 bewegt werden. In der Wartestellung muß unter der Schneidebrücke 4 kein fixer Teil einer die Auflage für Glas bildenden Platte 3 vorgesehen sein.

Zusammenfassend kann ein Ausführungsbeispiel der Erfindung wie folgt dargestellt werden:

Ein Glasschneidetisch 1 besitzt eine Auflage in Form einer Platte 3 für die zu teilende Glastafel, weiters eine entlang der Auflage verfahrbare Schneidebrücke 4, an der verstellbar ein Schneidekopf 6 mit einem Schneidewerkzeug angeordnet ist.

Die Antriebs- und Führungseinheit 10 für die Schneidebrücke 4 ist mit Abstand unterhalb der die Auflage des Glasschneidetisches 1 bildenden Platte 3 angeordnet und unabhängig von der Platte 3 am Grundgestell 2 des Glasschneidetisches 1 befestigt. Zusätzlich ist die Führungs- und Antriebseinheit 10, bestehend aus Führungsstangen 12 für die Schneidebrücke 4 und einem Zahnrad-Zahnriemenantrieb 15, 16, 17 für das Bewegen der Schneidebrücke 4 gegenüber der Außenkontur der Platte 3 des Glasschneidetisches 1 insbesondere den Längsrändern 5 der Platte 3 nach innen versetzt. So ist die Auflage des Glasschneidetisches 1 gut zugänglich, es besteht keine Gefahr, daß die Führungs- und Antriebseinheit 10 durch Glassplitter oder ähnliches verschmutzt oder beschädigt wird und es kann bei geteilt ausgeführter Platte 3, deren hochklappbarer Teil 30 unabhängig von der Führungs- und Antriebseinheit 10 zum Aufnehmen von zu teilenden Glastafeln hochgekippt werden.

## Patentansprüche

1. Glasschneidetisch (1) mit einer als Auflage für eine zu teilende Glastafel dienenden Platte (3), mit einem Grundgestell (2), mit einer entlang der Platte (3) verfahrbaren Schneidebrücke (4) und mit einem an der Schneidebrücke (4) verfahrbaren Schneidekopf (6), wobei die Schneidebrücke (4) an Führungen (12) geführt ist, die unterhalb der Platte (3) angeordnet sind, und den Enden der Schneidebrücke (4) ebenfalls unterhalb der Platte (3) angeordnete Endlosförderglieder (15) für das Verfahren der Schneidebrücke (4) entlang der Platte (3) zugeordnet sind, **dadurch gekennzeichnet, dass** die als Auflage dienende Platte (3) am Grundgestell (2) hochklappbar angebracht ist, dass die Führungen (12) und die Endlosförderglieder (15) von der hochklappbaren Platte (3) unabhängig am Grundgestell (2) angebracht sind, dass die Führungen (12) für die Schneidebrücke (4) gegenüber den Außenkanten (5) der Platte (3) nach innen versetzt angeordnet sind und dass die Schneidebrücke (4) in eine Stellung außerhalb der hochklappbaren Platte (3) bewegbar ist.

2. Tisch nach Anspruch 1, **dadurch gekennzeichnet, dass** die Führungen (12) für die Schneidebrücke (4) gegenüber den längsseitig verlaufenden Kanten (5) der Platte (3) nach innen versetzt angeordnet sind.

3. Tisch nach Anspruch 1 oder 2, **dadurch gekennzeichnet, dass** die Schneidebrücke (4) über von oben nach unten schräg nach innen gerichteten Verbindungsstücke (8) mit auf den Führungen (12) aufgesetzten Führungsschuhen (14) verbunden sind.

4. Tisch nach einem der Ansprüche 1 bis 3, **dadurch gekennzeichnet, dass** für den Antrieb der Endlosförderglieder (15) ein gemeinsamer Antriebsmotor (20) vorgesehen ist.

5. Tisch nach Anspruch 4, **dadurch gekennzeichnet, dass** der Antriebsmotor (20) eine Welle (21) antreibt, die beiden Endlosfördergliedern (15) als Antriebsmittel zugeordnet ist.

6. Tisch nach Anspruch 5, **dadurch gekennzeichnet, dass** die Endlosförderglieder Zahnriemen (15) sind und dass an der gemeinsamen Antriebswelle (21) die Zahnriemen (15) kämmende Zahnräder (17) befestigt sind.

7. Tisch nach einem der Ansprüche 1 bis 6, **dadurch gekennzeichnet, dass** die Platte (3) wenigstens einmal unterteilt ist, wobei ein, vorzugsweise kleinerer, Abschnitt (32) der Platte (3) einen Bereich bildet, in dem die Schneidebrücke (4) in ihrer Bereitschaftsstellung angeordnet ist, und dass der andere, vorzugsweise größere, Teil (30) der Platte (3) zum Aufnehmen von Glastafeln hochklappbar ist.

8. Tisch nach Anspruch 7, **dadurch gekennzeichnet, dass** der klappbare Teil (30) der Platte (3) um eine Achse verschwenkbar ist, die parallel zur Verschieberichtung der Schneidebrücke (4), also normal zur Schneidebrücke (4) ausgerichtet ist.

9. Tisch nach einem der Ansprüche 1 bis 8, **dadurch gekennzeichnet, dass** die Führungen (12) für die Schneidebrücke (4) quer zur Längserstreckung der Schneidebrücke (4) ausgerichtet sind.

10. Tisch nach einem der Ansprüche 1 bis 9, **dadurch gekennzeichnet, dass** die Führungen (12) für die Schneidebrücke (4) am Grundgestell des Schneidetisches befestigte Führungsschienen oder -stangen sind.

11. Tisch nach einem der Ansprüche 1 bis 10, **dadurch gekennzeichnet, dass** die Antriebsrollen (17) und die Umlenkrollen (16) für die Endlosglieder (15), insbesondere die Zahnriemen, am Grundgestell (2) gelagert sind.

12. Tisch nach einem der Ansprüche 1 bis 11, **dadurch gekennzeichnet, dass** der Antriebsmotor (20) für die Endlosglieder (15) am Grundgestell (2) befestigt ist.

13. Tisch nach einem der Ansprüche 1 bis 12, **dadurch gekennzeichnet, dass** die Antriebswelle (21) für beide Endlosglieder (15) im Grundgestell (2) drehbar gelagert ist.

## Claims

1. Glass cutting table (1) with a top (3) which is used as a support for the glass plate to be divided, with a base frame (2), with a cutting bridge (4) which can be moved along the top (3), and with a cutting head (6) which can be moved on the cutting bridge (4), the cutting bridge (4) being guided on guides (12) which are located underneath the top (3), and continuous conveyor elements (15) which are located likewise underneath the top (3) for moving the cutting bridge (4) along the top (3) being assigned to the ends of the cutting bridge (4), **characterized in that** the top (3) which is used as a support is mounted on the base frame (2) with a capacity to be folded up, that the guides (12) and the continuous conveyor elements (15) are mounted on the base frame (2) independently of the top (3) which can be folded up, that the guides (12) for the cutting bridge (4) are arranged offset to the inside relative to the outside edges (5) of the support (3) and that the cutting bridge (4) can be moved into a position outside of the top (3) which can be folded up.

2. Table as claimed in claim 1, wherein the guides (12) for the cutting bridge (4) are arranged offset to the inside relative to the edges (5) of the top (3) which run along the lengthwise side.

3. Table as claimed in claim 1 or 2, wherein the cutting bridge (4) is connected to guide shoes (14) which have been placed on the guides (12) by way of connecting pieces (8) which are pointed from top to bottom obliquely to the inside.

4. Table as claimed in one of claims 1 to 3, wherein there is a common drive motor (20) for the driving of the continuous conveyor elements (15).

5. Table as claimed in claim 4, wherein the drive motor (20) drives a shaft (21) which is assigned to the two continuous conveyor elements (15) as drive means.

6. Table as claimed in claim 5, wherein the continuous conveyor elements are toothed belts (15) and wherein gears (17) which mesh with the toothed belts (15) are mounted on the common drive shaft (21).

7. Table as claimed in one of claims 1 to 6, wherein the top (3) is subdivided at least once, a preferably smaller section (32) of the top (3) forming an area in which the cutting bridge (4) is located in its standby position, and wherein the other, preferably larger part (30) of the top (3) can be folded up to receive glass plates.

8. Table as claimed in claim 7, wherein the foldable part (30) of the top (3) can be pivoted around an axis which is aligned parallel to the displacement direction of the cutting bridge (4), therefore normal to the cutting bridge (4).

9. Table as claimed in one of claims 1 to 8, wherein the guides (12) for the cutting bridge (4) are aligned transversely to the lengthwise extension of the cutting bridge (4).

10. Table as claimed in one of claims 1 to 9, wherein the guides (12) for the cutting bridge (4) are guide rails or rods which are mounted on the base frame of the cutting table.

11. Table as claimed in one of claims 1 to 10, wherein the drive rolls (17) and the deflection rolls (16) for the continuous elements (15), especially the toothed belts, are supported on the base frame (2).

12. Table as claimed in one of claims 1 to 11, wherein the drive motor (20) for the continuous elements (15) is mounted on the base frame (2).

13. Table as claimed in one of claims 1 to 12, wherein the drive shaft (21) for the two continuous elements (15) is rotatably supported in the base frame (2).

## Revendications

1. Table de découpage de verre (1) comportant un plateau (3) servant de support pour une plaque de verre à découper, un bâti (2), un portique de découpage (4) déplaçable le long du plateau (3) et une tête de découpage (6) déplaçable sur le portique de découpage (4), le portique de découpage (4) étant guidé le long de glissières (12) qui sont disposées sous le plateau (3) et des organes de transmission sans fin (15) qui sont également disposés sous le plateau (3) étant associés aux extrémités du portique de découpage (4) pour le déplacement dudit portique de découpage (4) le long du plateau (3), **caractérisée par le fait que** le plateau (3) servant de support est monté avec possibilité de relevage sur le bâti (2), que les glissières (12) et les organes de transmission sans fin (15) sont montés sur le bâti (2) indépendamment du plateau (3), que les glissières (12) pour le portique de découpage (4) sont décalées vers l'intérieur par rapport aux bords extérieurs (5) du plateau (3) et que le portique de découpage (4) peut être amené dans une position à l'extérieur du plateau (3) relevable.

2. Table selon la revendication 1, **caractérisée par le fait que** les glissières (12) pour le portique (4) sont décalées vers l'intérieur par rapport aux bords longitudinaux (5) du plateau (3).

3. Table selon la revendication 1 ou 2, **caractérisée par le fait que** le portique (4) est lié à des patins de guidage (14) montés sur les glissières (12), par l'intermédiaire de pièces de liaison qui s'étendent du haut vers le bas en biais vers l'intérieur.

4. Table selon une des revendications 1 à 3, **caractérisée par le fait qu'**il est prévu un moteur d'entraînement (20) commun pour l'entraînement des organes de transmission sans fin (15).

5. Table selon la revendication 4, **caractérisée par le fait que** le moteur d'entraînement (20) entraîne un arbre (21) qui est associé comme moyen d'entraînement aux deux organes de transmission sans fin (15).

6. Table selon la revendication 5, **caractérisée par le fait que** les organes de transmission sans fin sont des courroies crantées (15) et que des roues dentées (17) qui engrènent avec les courroies crantées (15) sont fixées à l'arbre d'entraînement (21) commun.

7. Table selon une des revendications 1 à 6, **caractérisée par le fait que** le plateau (3) est divisé au moins une fois, une portion (32), de préférence plus petite, du plateau (3) formant une zone dans laquelle le portique de découpage (4) est placé en position d'attente et l'autre portion (30), de préférence plus grande, du plateau (3) pouvant être relevée aux fins de recevoir des plaques de verre.

8. Table selon la revendication 7, **caractérisée par le fait que** la portion (30) relevable du plateau (3) peut pivoter autour d'un axe qui s'étend parallèlement à la direction de déplacement du portique de découpage (4), c'est-à-dire qui est normal au portique de découpage (4).

9. Table selon une des revendications 1 à 8, **caractérisée par le fait que** les glissières (12) pour le portique de découpage (4) s'étendent transversalement à la direction longitudinale du portique de découpage (4).

10. Table selon une des revendications 1 à 9, **caractérisée par le fait que** les glissières (12) pour le portique de découpage (4) sont des rails de guidage ou des barres de guidage fixés au bâti de la table de découpage.

11. Table selon une des revendications 1 à 10, **caractérisée par le fait que** les roues d'entraînement (17) et les roues de renvoi (16) pour les organes de transmission sans fin (15), plus particulièrement les courroies crantées, sont montées sur le bâti (2).

12. Table selon une des revendications 1 à 11, **caractérisée par le fait que** le moteur d'entraînement (20) pour les organes de transmission sans fin (15) est fixé au bâti (2).

13. Table selon une des revendications 1 à 12, **caractérisée par le fait que** l'arbre d'entraînement (21) pour les deux organes de transmission sans fin (15) sont montés tournants sur le bâti (2).
